# FASCICULE DE BREVET EUROPEEN

(11) **EP 0 376 894 B1**
(45) Date de publication et mention de la délivrance du brevet: **24.05.1995**
(21) Numéro de dépôt: 89810986.3
(22) Date de dépôt: 27.12.1989
(51) Int. Cl.: F16K 31/06

(54) **Electrovalve avec éléments de connexion électrique et dispositifs de sécurité ou d'indication de l'état fonctionnel intégrés**
Magnetventil mit elektrischem Anschluss und integrierten Sicherheits- oder Funktionsanzeige-Vorrichtungen
Solenoid valve with electrical connection elements and security or function indication devices

(30) Priorité: 27.12.1988 CH 4801/88
(43) Date de publication de la demande: 04.07.1990
(73) Titulaire: FLUID AUTOMATION SYSTEMS S.A., CH-1290 Versoix (CH)
(72) Inventeur: Sarfati, Georges, F-74560 Monnetier-Mornex (FR); Merz, Peter, CH-1290 Versoix (CH); Sarfati, Freddy, CH-1290 Versoix (CH)
(74) Mandataire: KIRKER & Cie S.A.

(56) Documents cités:
- DE-B- 1 750 922
- DE-U- 7 833 549
- DE-U- 7 907 709
- FR-A- 1 263 988
- FR-A- 2 397 736

## Description

L'invention concerne une électrovalve comportant des éléments de connexion électrique et pouvant comporter des moyens de protection électrique, des moyens d'indication de l'état fonctionnel de l'électrovalve et/ou des moyens complémentaires à la fonction de l'électrovalve.

Les électrovalves connues pour la distribution des fluides sous pression ou dépression comportent un électro-aimant destiné à commander les mouvements d'ouverture et de fermeture de la valve. Quand on fait passer un courant par la bobine de l'électro-aimant, le flux magnétique engendré provoque le déplacement d'un noyau magnétique mobile qui déplace un clapet ouvrant et/ou fermant des orifices de passage pour un fluide. Les électrovalves sont souvent commandées dans les installations industrielles par des automates programmables et placées dans des armoires de commande requérant de nouvelles exigences en matière de connexion électrique, de sécurité ou d'indications sur l'état fonctionnel.

Les électrovalves actuelles comportent des éléments de connexion électrique, tels que cosses, picots, câbles, etc.., selon le système de connexion exigé par l'utilisateur. A ces éléments de connexion propres à l'électrovalve viennent se rajouter des composants de connexion électrique spécifiques, tels que connecteur à câble, connecteur d'indication visuelle de l'état fonctionnel pour l'indication de la mise sous tension de l'électro-aimant, ou des éléments de sécurité tels que des dispositifs d'antiparasitage ou autres circuits spécifiques.

Les variétés de connexions électriques exigées par les utilisateurs entrainent une multiplicité de versions d'électrovalves, créant pour le producteur des frais supplémentaires. D'autre part les éléments de sécurité et d'indication d'état fonctionnel se connectent entre l'électrovalve et la source de commande. Ces dispositifs s'ajoutant à l'électrovalve, ils sont encombrants, onéreux, et le montage de ces composants provoque une perte de temps pour l'utilisateur. Aucune électrovalve à ce jour n'apporte à ce problème une solution modulaire rationnelle.

On connaît encore du document DE-A-1 750 922 une électrovalve, selon le préambule de la revendication 1, dont la bobine est solidaire d'éléments de contact et comportant une coiffe de protection surmoulée renfermant lesdits éléments de contact et la bobine.

On connaît enfin du document DE-U-7 907 709 une électrovalve comportant un boîtier de protection en métal dans lequel vient s'emboîter un insert en matière plastique comportant un organe de connexion électrique.

La présente invention vise à simplifier les constructions existantes et concerne une électrovalve comportant un capot recouvrant au moins partiellement un électro-aimant et renfermant des éléments de connexion électrique qui se distingue par les caractéristiques de la revendication 1. Pour mieux comprendre les caractères et les avantages de l'invention, des formes d'exécution de l'invention vont être décrites à titre d'exemple en se référant aux dessins dans lesquels :
La fig. 1 est une coupe longitudinale de l'électrovalve.
La fig. 2 est une vue partielle schématique du capot avec des éléments de connexion à cosses plates.
La fig. 3 est une vue schématique d'une plaquette d un circuit électronique avec ses éléments de connexion.
La fig. 4 est une vue schématique d'une électrovalve sans capot.
La fig. 5 représente le schéma de montage électrique d'un groupe d'électrovalves.
Les fig. 6 et 6a représentent une forme de réalisation permettant une liaison directe entre électrovalves.
La fig. 7 représente un élément de liaison entre deux électrovalves.

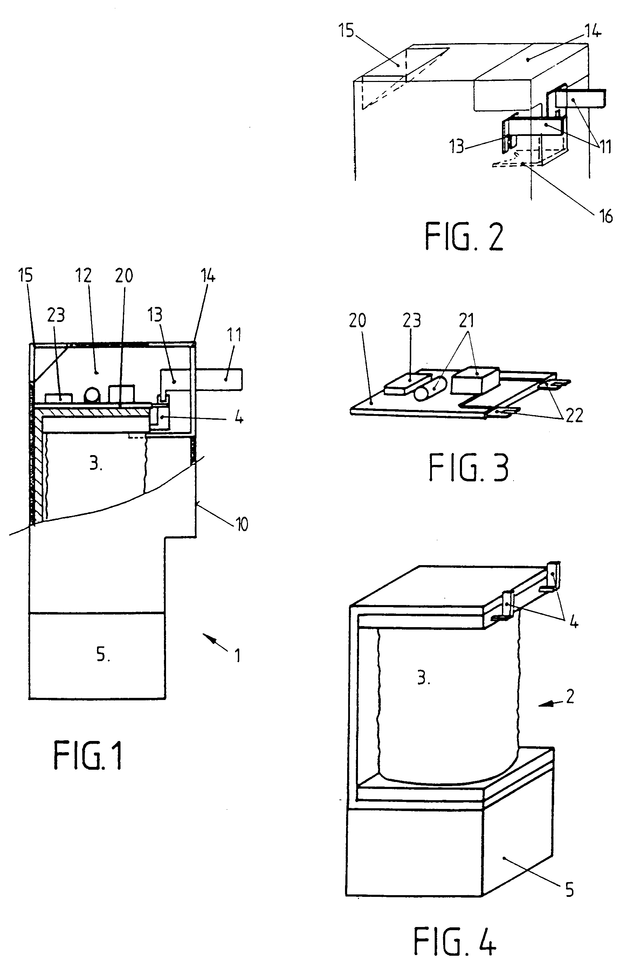

L'électrovalve 1 représentée à la fig.1 avec son capot 10 et à la fig.4 sans son capot comprend un électro-aimant 2 avec sa bobine 3 dont les extrémités sont raccordées aux picots 4 et à un corps de valve 5. Le capot 10 recouvre au moins partiellement l'électro-aimant et protège les raccordements électriques. Dans la forme d'exécution de la fig.1, il entoure entièrement l'électro-aimant 2, il porte des éléments de connexion électrique sous forme de cosses 11. Lorsque le capot est monté sur l'électro-aimant, les extrémités intérieures 13 des cosses 11 établissent le contact avec les picots 4 de la bobine. Le contact peut être établi de manière enfichable, comme représenté à la fig.2 où les extrémités fendues 13 sont élastiques pour enserrer le picot et garantir le contact.

En variante on peut aussi souder l'extrémité 13 sur le picot 4; dans ce cas on peut prévoir dans le capot une lumière, généralement fermée par un couvercle 14 qui se voit sur les fig.1 et 2. Le couvercle peut comporter des éléments 16 bloquant le capot monté et assurant son inviolabilité.

Lorsqu'on veut ajouter des circuits de protection électrique, pour éviter les parasites et/ou les surtensions par exemple, ou des circuits d'indication de l'état fonctionnel de l'électrovalve ou encore d'autres circuits, on peut utiliser un circuit 20, logé dans une cavité 12 du capot, comportant par exemple sur une plaquette de circuit imprimée des composants électroniques 21 et des moyens de connexion électrique 22 qui établissent le contact avec les picots 4 de la bobine comme représenté à la fig.1 ou/et avec les cosses 11,13 du capot.

Comme exemples d'autres circuits complémentaires à la fonction de l'électrovalve, on peut nommer un circuit de temporisation, un circuit de sécurité intrinsèque, un circuit de détection de la position du noyau mobile, un circuit de détection de présence de fluide, un circuit d'indexation logique, etc...

Lorsque le circuit 20 comporte un composant 23 émettant un signal lumineux, le capot est équipé d'une fenêtre translucide 15 permettant de voir ce signal de l'extérieur.

Ces réalisations ont été décrites avec deux connexions reliées aux extrémités de la bobine. Evidemment si on veut loger dans le haut du capot des circuits nécessitant encore d'autres connexions, il est facile d'imaginer une à plusieurs connexions supplémentaires.

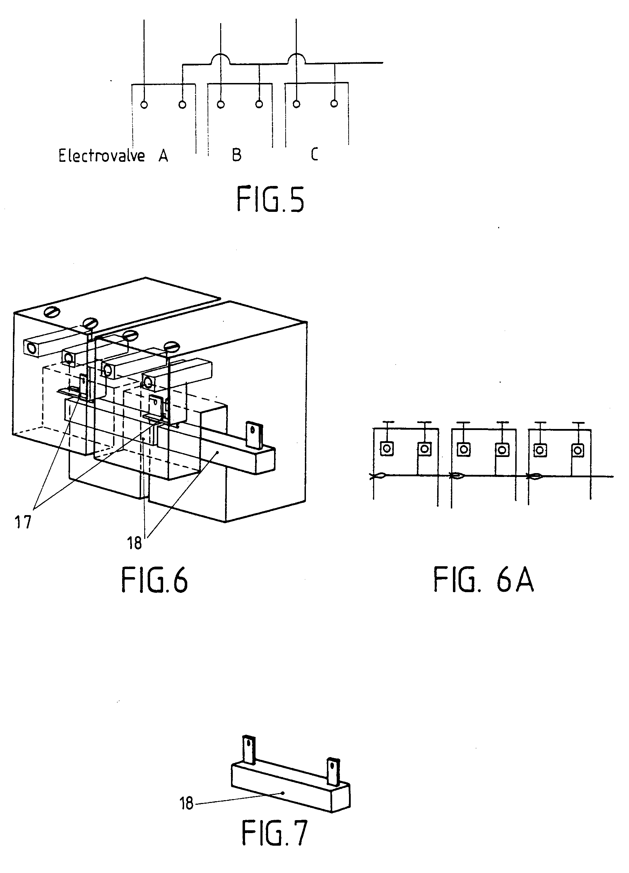

Lorsque le capot recouvre entièrement l'électro-aimant et ou' il est en matière synthétique isolante, aucune partie métallique de structure n'est accessible et il n'est pas nécessaire de prévoir une mise à terre. Les électrovalves sont souvent montées en groupe; la fig.5 montre un schéma électrique et les fig. 6 et 7 une solution simple pour établir une liaison électrique commune à des électrovalves. Des éléments de liaison électrique 18 relient les cosses 11 et/ou 13 à l'aide de prolongements 17 internes au capot.

La solution représentée pour deux électrovalves peut facilement être étendue à plusieurs électrovalves.

On voit donc que, grâce à l'invention, pour une seule exécution de l'ensemble formé de l'électro-aimant et de la valve, de nombreuses variantes peuvent être obtenues grâce au capot qui porte ou contient les dispositifs variés nécessités par différents usages.

## Revendications

1. Electrovalve comportant un capot (10) recouvrant au moins partiellement un électro-aimant (2) et renfermant des éléments de connexion électrique (11, 13), caractérisée par le fait que lesdits éléments de connexion électrique (11, 13) sont solidaires du capot (10), par le fait que le capot (10) est fixé de façon amovible sur l'électro-aimant par emboîtage et par le fait que ces éléments de connexion électrique (11, 13) sont en contact électrique avec la bobine (3) de l'électro-aimant (2) lorsque le capot (10) est emboîté sur l'électro-aimant.

2. Electrovalve selon la revendication 1, caractérisée par le fait qu'elle comporte un circuit (20), logé dans le capot (10), comportant des éléments électriques ou électroniques et muni de moyens de connexion (22), et par le fait que ces moyens de connexion (22) sont en contact électrique avec les éléments de connexion électrique (11, 13) et la bobine (3).

3. Electrovalve selon la revendication 2, caractérisée en ce que ledit circuit (20) comprend des moyens de protection électrique.

4. Electrovalve selon la revendication 2 ou 3, caractérisée en ce que ledit circuit (20) comprend des moyens d'indication (23) de l'état fonctionnel de l'électrovalve.

5. Electrovalve selon l'une des revendications 2 à 4, caractérisée en ce que ledit circuit (20) comprend des moyens complémentaires à la fonction de l'électrovalve.

6. Electrovalve selon l'une des revendications précédentes, caractérisée en ce qu'au moins une partie (13) des dits éléments de connexion électrique (11, 13) est à l'intérieur du capot (10).

7. Electrovalve selon l'une des revendications précédentes, caractérisée en ce qu'au moins une partie (11) des dits éléments de connexion électrique (11, 13) traverse la paroi du capot (10).

8. Electrovalve selon l'une des revendications précédentes, caractérisée en ce que lesdits éléments de connexion (11, 13) solidaires du capot (10) comportent des prolongements (17) en contact électrique avec des éléments de liaison électrique (18) reliant électriquement cette électrovalve à au moins une autre électrovalve.

9. Electrovalve selon la revendication 1 ou la revendication 2, caractérisée en ce que lesdits éléments de connexion (11, 13) comportent des prolongements (17) en contact électrique avec au moins un élément de liaison électrique (18) assurant une liaison électrique commune de l'un des éléments électriques de connexion (11, 13) du capot (10) des différentes électrovalves ainsi interconnectées.

## Claims

1. A solenoid valve having a casing (10) covering at least partly an electromagnet (2) and housing electrical connexion members (11, 13), characterized in that said electrical connexion members (11, 13) are integral with the casing (10), in that the electromagnet is housed inside the casing (10) and fastened removably thereto, and in that these electrical connexion members (11, 13) are in electrical contact with the coil (3) of the electromagnet (2) when the electromagnet is housed inside the casing (10).

2. A solenoid valve according to claim 1, characterized in that it includes a circuit (20) which is housed in the casing (10) including electric or electronic members and which is provided with connexion means (22), and in that these connexion means (22) arc in electrical contact with the electrical connexion members (11, 13) and with the coil (3).

3. A solenoid valve according to claim 2, characterized in that said circuit (20) includes electrical protection means.

4. A solenoid valve according to claim 2 or 3, characterized in that said circuit (20) includes means (23) for indicating the operational status of the solenoid valve.

5. A solenoid valve according to one of the claims 2 to 4, characterized in that said circuit (20) includes complementary means (20) for the functioning of the solenoid valve.

6. A solenoid valve according to one of the preceding claims, characterized in that at least one part (13) of said electrical connexion members 11, 13) are inside the casing (10).

7. A solenoid valve according to one of the preceding claims, characterized in that at least one part (11) of said electrical connexion members (11, 13) extend through the wall of the housing (10).

8. A solenoid valve according to one of the preceding claims, characterized in that said connexion members (11, 13) which are integral with the casing (10) include extensions (77) electrically in contact with electrical linking members (18) which link electrically this solenoid valve to at least another solenoid valve.

9. A solenoid valve according to claim 1 or claim 2, characterized in that said connexion members (11, 13) include extensions (17) in electrical contact with at least one electrical linking member (18) ensuring a common electrical linking of one of the electrical connexion members (11, 13) of the casing (10) of the different solenoid valves thus interconnected.

## Patentansprüche

1. Elektrisches Ventil mit einer Schutzkappe (10), die zumindest teilweise einen Elektromagneten (2) abdeckt und Stromanschlusselemente (11, 13) umschliesst, dadurch gekennzeichnet, dass die benannten Stromanschlusselemente (11, 13) mit der Schutzkappe (10) fest verbunden sind, dass die Schutzkappe (10) abnehmbar auf den Elektromagneten gesteckt ist und dass diese Stromanschlusselemente (11, 13) in elektrischem Kontakt mit der Spule (3) des Elektromagneten (2) stehen, wenn die Schutzkappe (10) auf den Elektromagneten gesteckt ist.

2. Elektrisches Ventil gemäss Anspruch 1, dadurch gekennzeichnet, dass es eine in der Schutzkappe (10) untergebrachte Schaltung (20) enthält, die elektrische oder elektronische Bauteile enthält und mit Anschlussorganen (22) versehen ist, und dass diese Anschlussorgane (22) in elektrischem Kontakt mit den Stromanschlusselementen (11, 13) und der Spule (3) stehen.

3. Elektrisches Ventil gemäss Anspruch 2, dadurch gekennzeichnet, dass die benannte Schaltung (20) elektrische Schutzorgane umfasst.

4. Elektrisches Ventil gemäss Anspruch 2 oder 3, dadurch gekennzeichnet, dass die benannte Schaltung (20) Anzeigeorgane (23) für den Betriebszustand des elektrischen Ventils umfasst.

5. Elektrisches Ventil gemäss einem der Ansprüche 2 bis 4, dadurch gekennzeichnet, dass die benannte Schaltung (20) Organe enthält, die die Funktion des elektrischen Ventils ergänzen.

6. Elektrisches Ventil gemäss einem der vorangehenden Ansprüche, dadurch gekennzeichnet, dass zumindest ein Teil (13) der benannten Stromanschlusselemente (11, 13) sich innerhalb der Schutzkappe (10) befindet.

7. Elektrisches Ventil gemäss einem der vorangehenden Ansprüche, dadurch gekennzeichnet, dass zumindest ein Teil (11) der benannten Stromanschlusselemente (11, 13) die Wandung der Schutzkappe (10) durchdringt.

8. Elektrisches Ventil gemäss einem der vorangehenden Ansprüche, dadurch gekennzeichnet, dass die benannten, mit der Schutzkappe (10) fest verbundenen Stromanschlusselemente (11, 13) Verlängerungsstücke (17) in elektrischem Kontakt mit elektrischen Verbindungselementen (18) aufweisen, die dieses elektrische Ventil mit zumindest einem weiteren elektrischen Ventil elektrisch verbinden.

9. Elektrisches Ventil gemäss Anspruch 1 oder Anspruch 2, dadurch gekennzeichnet, dass die benannten Anschlusselemente (11, 13) Verlängerungsstücke (17) in elektrischem Kontakt mit zumindest einem elektrischen Verbindungselement (18) aufweisen, das eine gemeinsame elektrische Verbindung je eines der Stromanschlusselemente (11, 13) der Schutzkappen (10) verschiedener, auf diese Art untereinander verbundener elektrischer Ventile gewährleistet.
